# EUROPEAN PATENT APPLICATION

(11) **EP 2 042 900 A1**
(43) Date of publication of application: **01.04.2009**
(21) Application number: 08016781.0
(22) Date of filing: 24.09.2008
(51) Int. Cl.: G02B 6/122, G02B 6/136, G02B 6/42

(54) **Planar lightwave circuit, manufacturing method thereof, and light waveguide device**

(30) Priority: 28.09.2007 JP 2007255202
(71) Applicant: NEC Corporation, Minato-ku Tokyo 108-8001 (JP)
(72) Inventor: Watanabe, Shinya, Minato-ku, Tokyo (JP)
(74) Representative: Glawe, Delfs, Moll

(57) **Abstract**

To provide a PLC and the like, which can improve the optical coupling efficiency by coupling an optical element to a light waveguide part without having a gap. The PLC includes a light waveguide part (20) and an optical element mount part (90). The light waveguide part has a lower clad layer (21), a core layer (24), and an upper clad layer (22) formed on a part of a silicon substrate (73) as a substrate. The optical element mount part has an LD (72), which is to be optically coupled at the light waveguide end face (24a) as an end face of the light waveguide, loaded on the silicon substrate. At the light waveguide end face, an end face of the lower clad layer is recessed with respect to an end face of the core layer and an end face of the upper clad layer towards a direction away from the LD.

## Description

### CROSS-REFERENCE TO RELATED APPLICATION

This application is based upon and claims the benefit of priority from Japanese patent application No. 2007-255202, filed on September 28, 2007, the disclosure of which is incorporated herein in its entirety by reference.

### BACKGROUND OF THE INVENTION

### 1. Field of the Invention

The present invention relates to a planar lightwave circuit having a light waveguide part and an optical element mount part on a substrate, etc. Hereinafter the "planar lightwave circuit" is referred to as PLC in short.

### 2. Description of the Related Art

As optical transceivers used on the market of optical access business, there are a micro-optics type module that is configured with LD (Laser Diode), PD (Photodiode), a thin film filter, a lens, and the like, and a PLC module that is configured by fabricating a quartz waveguide on a silicon substrate, and mounting LD, PD, and the like on the surface. Both types have advantages and disadvantages. However, the latter is expedient in terms of the cost and delivery, since it does not require adjustment of the optical axis while monitoring light output. A mounting method used in the latter PLC module is normally referred to as passive alignment packaging. With the passive alignment packaging, positioning accuracy regarding the planar direction with respect to a waveguide chip is secured by image-recognizing an alignment marker with infrared rays. The accuracy regarding the vertical direction is secured by a block refereed to as a pedestal. The height of the pedestal is set with high precision, so that it is possible to align an optical component with the light waveguide by simply loading the optical component on the pedestal. At last, both of those components are fixed via solder or the like. Japanese Registered Patent Publication No. 2823044 (Patent Document 1) discloses an example of such structure. Hereinafter, a technique regarding Patent Document 1 will be described as the related technique.

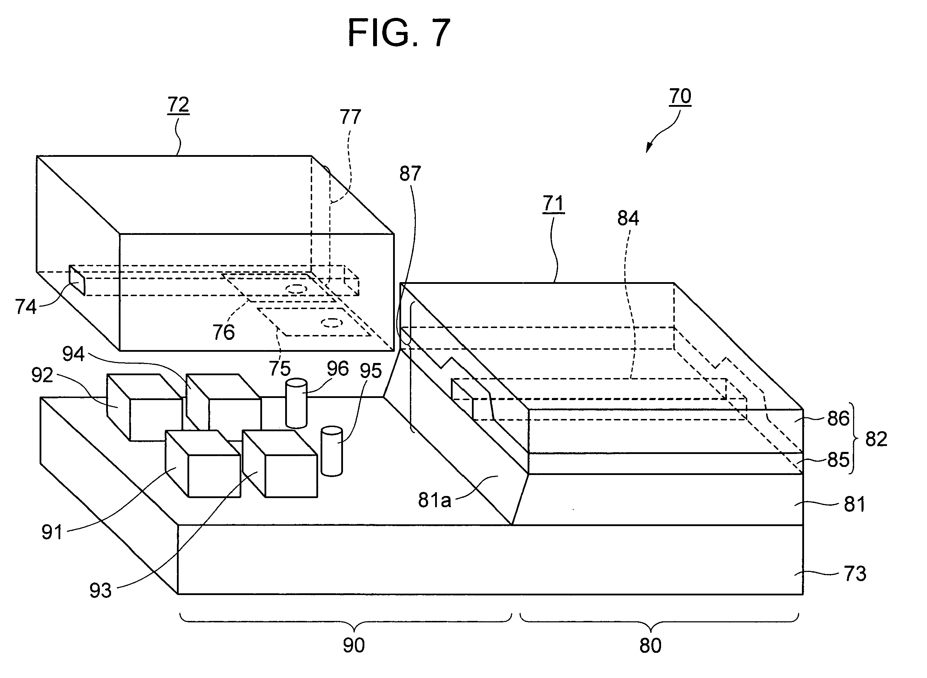

FIG. 7 is a detailed perspective view of a light waveguide device according to the related technique before packaging. Explanations will be provided hereinafter by referring to this drawing.

A light waveguide device 70 according to the related technique has a PLC 71 and an LD 72 mounted to the PLC 71. The PLC 71 includes: a light waveguide part 80 having a lower clad layer 81, a core layer 84, and an upper clad layer 82 formed on a part of a silicon substrate 73; and an optical element mount part 90 for mounting, on the silicon substrate 73, the LD 72 that is to be optically coupled via a light waveguide end face 87. The upper clad layer 82 is configured with an embedding layer 85 for covering the core layer 84, and a clad layer 86 superimposed on the embedding layer 85.

The light waveguide part 80 is formed with a silica film on the silicon substrate 73. On the optical element mount part 90, a part of the silica film on the silicon substrate 73 is eliminated, and pedestals 91 - 94 for loading the LD 72 and alignment markers 95, 96 are formed. The height of the pedestals 91 - 94 is so designed that the height of an active layer 74 of the LD 72, when being loaded thereon, fits to the height of the core layer 84 of the light waveguide part 80. In the meantime, the planar direction is adjusted by using the alignment markers 95 and 96. Those alignment markers 95 and 96 are formed in a column shape, and the top faces thereof are covered by a metal film. The centers of the circles on the top faces of the alignment markers 95 and 96 are adjusted with high precision on the basis of the position of the core layer 84. Further, alignment markers 75 and 76 formed with metal patterns as circle cutting dies are also formed on the back side the LD 72 (epi-side surface). The centers of the circles on the top faces of the alignment markers 75 and 76 are adjusted with high precision on the basis of the position of the active layer 74. The alignment markers 95, 96 and the alignment markers 75, 76 are overlapped with each other, an infrared ray is irradiated from the back face side of the silicon substrate 73, and transmission light is monitored from the above by CCD (Charge Coupled Device). Since the infrared ray is shielded only at the metal part, a marker image between the LD 72 and the PLC 71 can be produced. The positions of the alignment markers 75, 76 on the PLC 71 side and the positions of the alignment markers 95, 96 of the LD 72 side are determined with high precision with respect to the core layer 84 and the active layer 74, respectively. Therefore, the optical axis in the planar direction can be aligned by loading the LD 72 at the position where the centers of the circles of both markers match with each other.

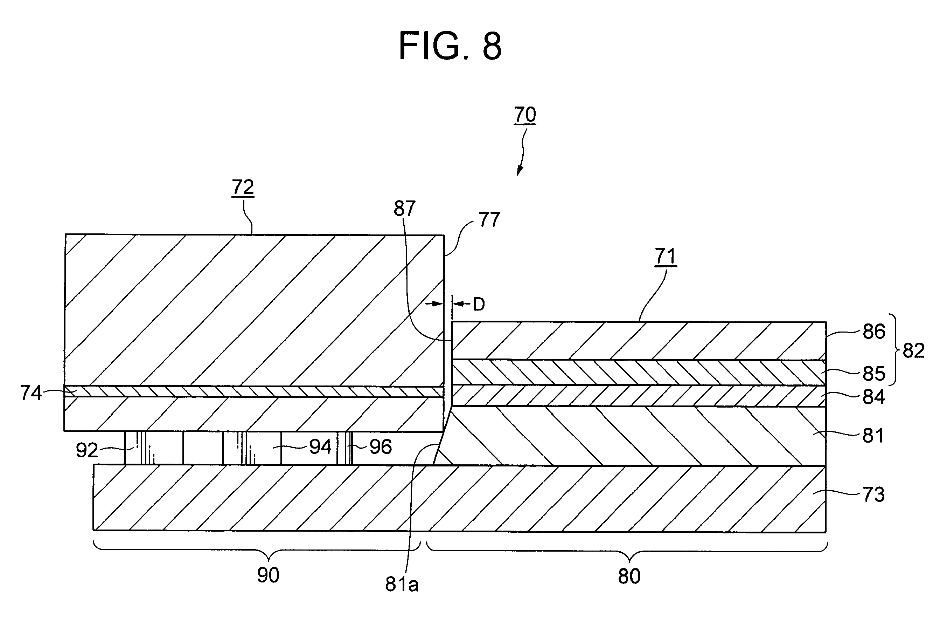

FIG. 8 is a sectional view of the light waveguide device of FIG. 7 after packaging. Issues of the related technique will be described hereinafter by referring to FIG. 7 and FIG. 8.

Normally, the light waveguide end face 87 via which the LD 72 is coupled to the PLC 71 is formed by RIE (Reactive Ion Etching). At that time, an area in the vicinity of intersecting point between the face that is etched in parallel to the silicon substrate 73 and the light waveguide end face 87 that gradually appears by the etching tends to have a low pressure. Thus, an etching gas does not volatilize and tends to stay there. As a result, a reaction product film such as a fluorocarbon polymer film becomes easily formed, so that an end face 81a of the lower clad layer 81 is formed into a slope. The light waveguide end face 87 formed in this manner comes to have a slightly tilted shape (the lower part becomes projected) at last.

This tendency becomes more prominent by following causes. Normally, a pure film to which doping is hardly applied (for example, NSG: Non-doped Silicate Glass) is used for the lower clad layer 81, and heat treatment at a relatively high temperature (about 1,000 degrees Celsius) is applied. This is because it is necessary to form the upper clad layer 82 as a film with a sufficiently high softening point, so that the core layer 84 and the like do not sink into the lower clad layer 81 at the time of applying heat treatment for forming the core layer 84 and the upper clad layer 82 after forming the lower clad layer 81. In the meantime, the upper clad layer 82 needs to be a film with a relatively low softening point so as to embed the formed core layer 84 without having voids. Therefore, a film to which an impurity is doped (for example, BPSG: Borophospho Silicate Glass) is used, and heat treatment at a relatively low temperature (850 degrees Celsius) is applied.

Normally, a relation between the heat treatment temperatures applied on the film coincides with a relation between etching rates of dry etching performed on the film by RIE or the like. That is, a film heat-treated at a higher temperature comes to have a minute crystalline structure, so that it becomes harder to be dry-etched. That is, the etching rate by RIE becomes slower for the lower clad layer 81 than for the upper clad layer 82 and the core layer 84. As a result, the etching time of the end face 81a of the lower clad layer 81 is extended, so that it tends to be affected by a reaction product film. Therefore, the end face 81a of the lower clad layer 81 tends to have a greater slop than the etching faces of the upper clad layer 82 and the core layer 84.

The light waveguide end face 87 formed in this manner is not perfectly vertical to the silicon substrate 73. More exactly, the upper clad layer 82 part in the light waveguide end face 87 is almost vertical, while the lower clad layer part 81 becomes slightly tilted. In the meantime, a light emission end face 77 of the LD 72 is flat, and it is coupled to a light waveguide end face 87 in a form that is almost vertical to the silicon substrate 73. That is, even if it is tried to bring both to fit with each other by suppressing a gap therebetween as much as possible in order to increase the optical coupling efficiency, the slope of the end face 81a of the lower clad layer 81 comes to be in contact first with the LD 72. Thus, a gap D is generated therebetween, so that both end faces cannot be brought closer than that.

### SUMMARY OF THE INVENTION

An exemplary object of the present invention is to provide a PLC and the like, which can improve the optical coupling efficiency by coupling an optical element with a light waveguide part without having a gap.

A PLC according to an exemplary aspect of the invention includes: a light waveguide part having a lower clad layer, a core layer, and an upper clad layer formed on a part of a substrate; and an optical element mount part for loading, on the substrate, an optical element that is to be optically coupled to an end face of the light waveguide part. At the end face of the light waveguide part, an end face of the lower clad layer is recessed with respect to an end face of the core layer and an end face of the upper clad layer towards a direction away from the optical element.

A light waveguide device according to another exemplary aspect of the invention includes the PLC according to the present invention and the optical element mounted to the PLC.

A PLC manufacturing method according to still another exemplary aspect of the invention is a method for manufacturing a PLC which includes a light waveguide part having a lower clad layer, a core layer, and an upper clad layer formed on a part of a substrate, and an optical element mount part for loading, on the substrate, an optical element that is to be optically coupled to an end face of the light waveguide part. The PLC manufacturing method according to the present invention includes: a first step of laminating the lower clad layer, the core layer, and the upper clad layer on the substrate; a second step of forming the light waveguide part and the optical element mount part through eliminating the lower clad layer, the core layer, and the upper clad layer formed on the part of the substrate by using anisotropy etching; and a third step of applying wet etching on the end face of the light waveguide part by using etchant that exhibits a greater etching rate for the lower clad layer than for the core layer and the upper clad layer to make an end face of the lower clad layer recessed with respect to and end face of the core layer and an end face of the upper clad layer towards a direction away from the optical element.

### BRIEF DESCRIPTION OF THE DRAWINGS

FIG. 1 is a detailed perspective view showing a first exemplary embodiment of a light waveguide device according to the invention before packaging;
FIG. 2 is a sectional view of the light waveguide device of FIG. 1 after packaging;
FIG. 3 shows first sectional views of a first exemplary embodiment of a PLC manufacturing method according to the invention;
FIG. 4 shows second sectional views of the first exemplary embodiment of the PLC manufacturing method according to the invention;
FIG. 5 is a detailed perspective view showing a second exemplary embodiment of the light waveguide device according to the invention before packaging;
FIG. 6 is a detailed perspective view showing a third exemplary embodiment of the light waveguide device according to the invention before packaging;
FIG. 7 is a detailed perspective view showing a light waveguide device according to a related technique before packaging; and
FIG. 8 is a sectional view showing the light waveguide device of FIG. 7 after packaging.

### DETAILED DESCRIPTION OF THE EXEMPLARY EMBODIMENTS

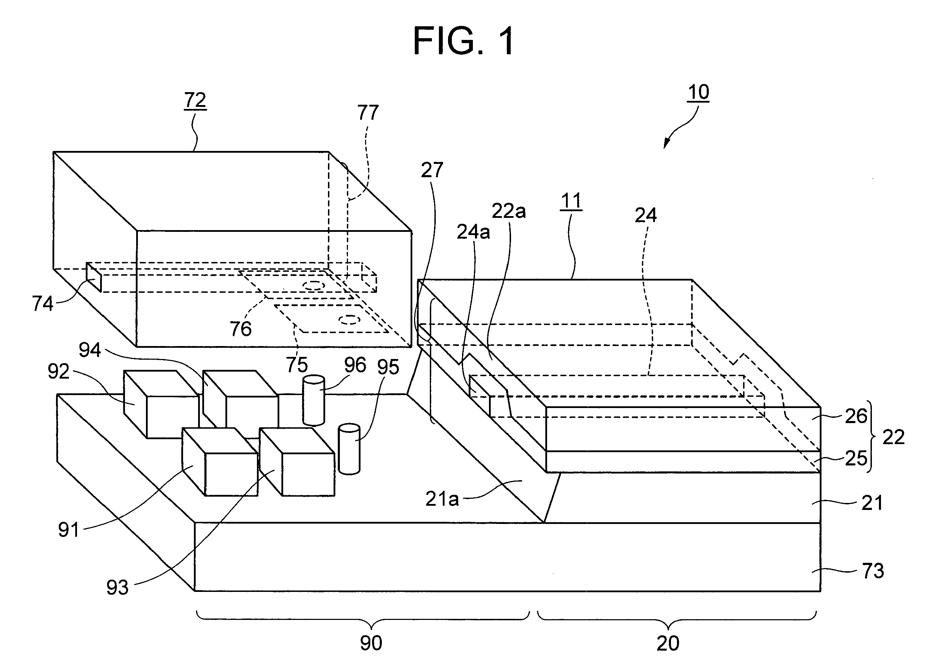

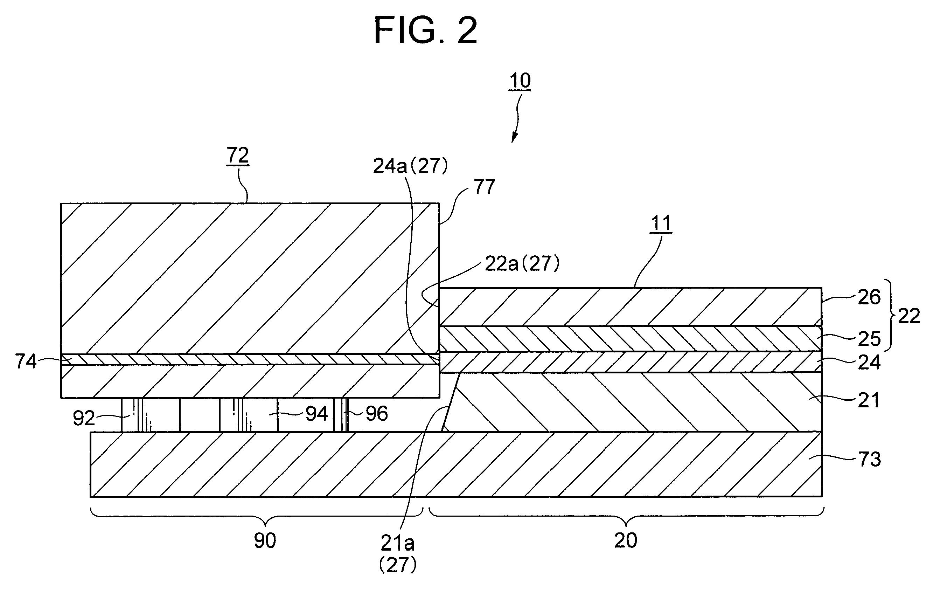

FIG. 1 is a detailed perspective view showing a first exemplary embodiment of a light waveguide device according to the invention before packaging. FIG. 2 is a sectional view of the light waveguide device of FIG. 1 after packaging. Explanations will be provided hereinafter by referring to FIG. 1 and FIG. 2. Same reference numerals are applied to the same components as those of FIG. 7 and FIG. 8, and explanations thereof will be omitted.

A light waveguide device 10 according to this exemplary embodiment includes a PLC 11 of the exemplary embodiment and an LD 72 as an optical element mounted to the PLC 11. The PLC 11 includes a light waveguide part 20 and an optical element mount part 90. The light waveguide part 20 has a lower clad layer 21, a core layer 24, and an upper clad layer 22 formed on a part of a silicon substrate 73 as a substrate. The optical element mount part 90 has the LD 72, which is to be optically coupled at a light waveguide end face 27 as an end face of the light waveguide 20, loaded on the silicon substrate 73. At the light waveguide end face 27, an end face 21a of the lower clad layer 21 is recessed with respect to an end face 24a of the core layer 24 and an end face 22a of the upper clad layer 22 towards a direction away from the LD 72. The upper clad layer 22 is configured with an embedding layer 25 for covering the core layer 24 and a clad layer 26 that is superimposed on the embedding layer 25.

Next, functions and effects of the PLC 11 and the light waveguide device 10 according to the exemplary embodiment will be described. At the light waveguide end face 27, the end face 21a of the lower clad layer 21 is recessed with respect to the end face 24a of the core layer 24 and the end face 22a of the upper clad layer 22 towards a direction away from the LD 72. Thus, when mounting the LD 72 by bringing it close to the light waveguide end face 27, the LD 72 does not come in contact first with the end face 21a of the lower clad layer 21. Therefore, as shown in FIG. 2, the LD 72 can be coupled to the light waveguide part 20 without having a gap, so that the optical coupling efficiency can be improved.

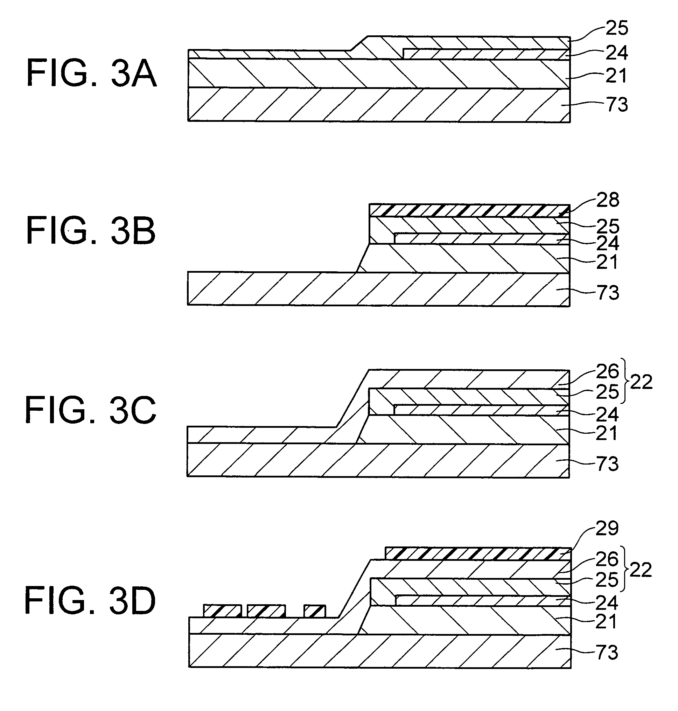

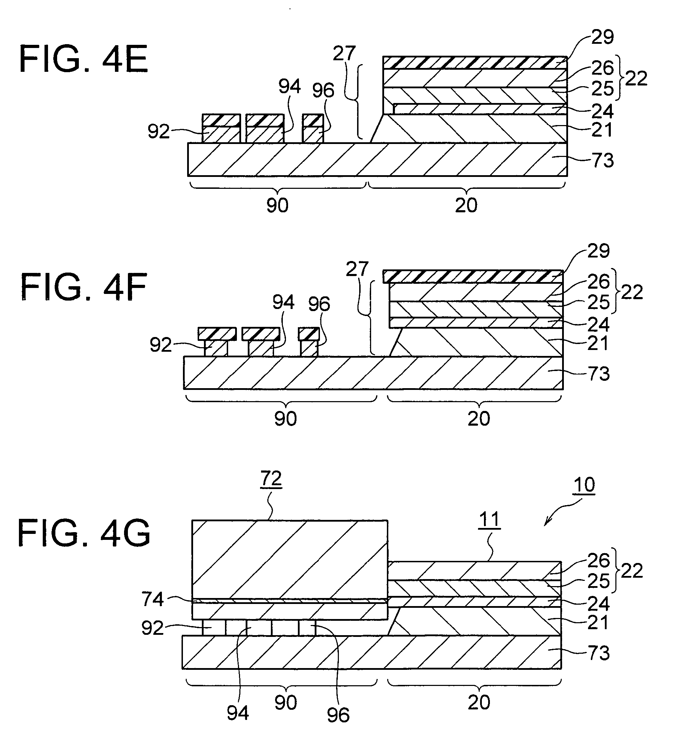

FIG. 3 and FIG. 4 are sectional view showing a first exemplary embodiment of a method for manufacturing the PLC shown in FIG. 1. This exemplary embodiment is a method for manufacturing the PLC shown in FIG. 1. Thus, explanations will be provided hereinafter by referring to FIG. 1 - FIG. 4.

This exemplary embodiment is a method for manufacturing the PLC 11 shown in FIG. 1. The PLC 11 includes the light waveguide part 20 and the optical element mount part 90. The light waveguide part 20 has the lower clad layer 21, the core layer 24, and the upper clad layer 22 formed on a part of the silicon substrate 73. The optical element mount part 90 has the LD 72, which is to be optically coupled at the light waveguide end face 27, loaded on the silicon substrate 73. At the light waveguide end face 27, the end face 21a of the lower clad layer 21 is recessed with respect to the end face 24a of the core layer 24 and the end face 22a of the upper clad layer 22 towards a direction away from the LD 72.

The manufacturing method according to this exemplary embodiment is characterized to include a first step, a second step, and a third step described in the followings. In the first step, the lower clad layer 21, the core layer 24, and the upper clad layer 22 are laminated on the silicon substrate 73 (steps A, B, and C in FIG. 3). In the second step, a part of the lower clad layer 21, the core layer 24, and the upper clad layer 22 on the silicon substrate 73 is eliminated by using anisotropic dry etching to form the light waveguide part 20 and the optical element mount part 90 (step D in FIG. 3 and step E in FIG. 4). In the third step, wet etching is applied to the light waveguide end face 27 by using etchant that exhibits a greater etching rate for the lower clad layer 21 than for the core layer 24 and the upper clad layer 22 so as to have the end face 21a of the lower clad layer 21 recessed with respect to the end face 24a of the core layer 24 and the end face 22a of the upper clad layer 22 towards the direction away from the LD 72 (step F in FIG. 4).

When eliminating the lower clad layer 21, the core layer 24, and the upper clad layer 22 by using anisotropic dry etching in the second step, an area in the vicinity of intersecting point between the face that is etched in parallel to the silicon substrate 73 and the light waveguide end face 27 that gradually appears by the etching tends to have a lower pressure. Thus, an etching gas does not volatilize and tends to stay there. As a result, a reaction product film is easily formed on the end face 21a of the lower clad layer that appears at last by etching, so that the end face 21a formed into a slope. Normally, a minute film is used for the lower clad layer 21 so that the core layer 24 does not sink in. Therefore, the dry etching rate thereof is slow. This helps forming the slop shape of the end face 21a of the lower clad layer 21. That is, the end face 21a of the lower clad layer 21 becomes projected with respect to the end faces of the upper clad layer 22 and the core layer 24 towards a direction approaching to the LD 72.

Thus, in the third step, wet etching is applied to the light waveguide end face 27 by using etchant that exhibits a greater etching rate for the lower clad layer 21 than for the core layer 24 and the upper clad layer 22. With this, the end face 21a of the lower clad layer 21 becomes more recessed towards the direction away from the LD 72 than the end face 24a of the core layer 24 and the end face 22a of the upper clad layer 22. Thus, when mounting the LD 72 by bringing it close to the light waveguide end face 27, the LD 72 does not come in contact first with the end face 21a of the lower clad layer 21 (step G in FIG. 4). Therefore, it is possible to couple the LD 72 to the light waveguide part 20 without having a gap, so that the optical coupling efficiency can be improved.

Next, functions of the exemplary embodiment will be described in detail. Hereinafter, hydrofluoric acid based aqueous solutions are generally referred to as "hydrofluoric acid".

The silica film that configures the light waveguide part 20 can be etched by hydrofluoric acid. The silica film to which boron is doped exhibits high etching resistance to hydrofluoric acid, i.e. , it is hard to be etched. When BPSG is compared to NSG, NSG is etched faster than BPSG. This etching rate ratio (etching selection ratio) varies depending on the content of boron and heat treatment temperature of the film. However, normally, BPSG is not etched faster than NSG.

This is also observed when the light waveguide end face 27 is dipped in a hydrofluoric acid based etchant. That is, before being dipped in the etchant, the lower clad layer 21 is projected with respect to the upper clad layer 22. However, after being dipped in the etchant for a given time or longer, the upper clad layer 22 becomes projected with respect to the lower clad layer 21. With this, the lower clad layer 21 does not become an obstacle when fitting the light emission end face 77 of the LD 72 to the light waveguide end face 27, so that the both can be coupled to each other without having a gap.

FIG. 1 and FIG. 2 are schematic illustrations of the light waveguide device 10 that is fabricated by passive alignment packaging. The core layer 24 in the drawings is drawn as a simple straight waveguide for conveniences' sake. However, in practice, it is designed diversely for enabling various functions. FIG. 1 is a schematic illustration before the LD 72 is mounted to the PLC 11, and FIG. 2 is a sectional view taken through the core layer 24 after packaging. As shown in the step E of FIG. 4, the light waveguide end face 27 is not perfectly vertical to the silicon substrate 73 as described above, and it is in a slope shape with the lower clad layer 21 side being more projected than the upper clad layer 22 side. Therefore, it is not possible in such a state to completely couple the light emission end face 77 of the LD 72 to the light waveguide end face 27 without having a gap.

Thus, a film whose etching rate by hydrofluoric acid is slower than the lower clad layer 21 is used for the upper clad layer 22, and it is then dipped in hydrofluoric acid after the light waveguide end face 27 is exposed. With this, the lower clad layer 21 side can be selectively etched as shown in step F of FIG. 4. As a result, the light emission end face 77 of the LD 72 and the light waveguide end face 27 can be coupled without having a gap, at least at the exposed end face of the active layer 74 and the exposed end face of the core layer 24.

First, each of the steps A - F will be described in more details. Hereinafter, explanations will be provided by having buffered hydrofluoric acid (BHF) as preferable etchant for performing wet etching and having reactive ion etching as preferable anisotropic dry etching. However, the etchant and the etching type are not limited to those, as long as it is possible to achieve the same effects.

### (Step A)

First, through the same procedures as those of a typical light waveguide manufacturing method, the lower clad layer 21 is formed on the silicon substrate 73, the core layer 24 is then formed thereover, and the core layer 24 is processed to a prescribed shape by photolithography and RIE. Thereafter, the embedding layer 25 for embedding the processed core layer 24 is deposited, and the core layer 24 is embedded by annealing. Note here that an NSG film having a relatively high softening point is used for the lower clad layer 21, so that the core layer 24 does not sink in at the time of annealing. Also, an SiON film having a relatively high softening point is used for the core layer 24, so that it is not deformed by the annealing. In the meantime, a reflow characteristic is required for the embedding layer 25, so that a BPSG film having a low softening point is used for the embedding layer 25.

### (Step B)

Subsequently, a photoresist film 28 is formed by photolithography, and the lower clad layer 21 and the embedding layer 25 at a part where the LD 72 is to be loaded are eliminated by RIE. Here, the core layer 24 is designed in advance so as not to reach the end face that is exposed by the elimination.

### (Step C)

Then, a clad layer 26 of the upper cad layer 22 is formed. The same BPSG film as that of the embedding layer 25 is also used for the clad layer 26. This clad layer 26 also functions as pedestals 91 - 94 at last, so that the film thickness is determined uniquely. That is, the film thickness is determined so that the center axis of the active layer 74 of the LD 72 matches with the center axis of the core layer 24 of the light waveguide part 20, when the LD 72 is loaded on the pedestals 91 - 94. If it is desired to set the sum of the film thickness of the embedding layer 25 and the film thickness of the clad layer 26 to be a prescribed value or more for the characteristic of the light waveguide, the film thickness of the embedding layer 25 may be adjusted. That is, for thinning the clad layer 26 in order to lower the pedestals 91 - 94, the embedding layer 25 may be thickened. After forming the clad layer 26, annealing is applied as necessary.

### (Step D)

Subsequently, a photoresist film 29 is formed by photolithography, and the pedestals 91 - 94, alignment markers 95, 96, and the light waveguide end face 27 are formed by RIE (Step E) . Here, the core layer 24 is also designed in advance so as not to reach the light waveguide end face 27 that is exposed by etching.

### (Step F)

Then, those are dipped in an etchant such as BHF, while keeping the photoresist film 29. At this time, etching of the NSG film having faster etching rate for the BHF than that of the BPSG film and the SiON film advances faster. As a result, only the lower clad layer 21 part of the light waveguide end face 27 is recessed further.

The dipping time performed at this point is determined as follows. First, the etching rates of the etchant for the lower clad layer 21, the core layer 24, the embedding layer 25, and the clad layer 26 are obtained experimentally or logically. Then, based on those etching rates, the time required for the core layer 24 to be exposed on the surface of the light waveguide end face 27, and for the lower clad layer 21 part in the light waveguide end face 27 to be recessed with respect to the upper clad layer 22 by a prescribed amount is calculated. This calculated time is the dipping time. The amount of recess from the exposed light waveguide end face 27 to the end face 24a of the core layer 24 in the step E is designed by considering the dipping time. Further, the sizes of the pedestals 91 - 94 and the alignment markers 95, 96 become smaller because the outer peripheral parts thereof are etched. Thus, the sizes of those are also designed by considering it.

### (Step G)

Subsequently, necessary steps such as patterning of metals such as electrodes and passivation of an oxide film for insulating between the electrodes and the silicon substrate, although not shown. Thereby, a platform of the PLC 11 is completed. At last, the LD 72 is mounted to the PLC 11 by passive alignment packaging to complete the light waveguide device 10.

As an exemplary advantage according to the invention, at the end face of the light waveguide part, the end face of the lower clad layer is recessed with respect to the end face of the core layer and the end face of the upper clad layer in a direction away from the optical element. Thus, when mounting the optical element by bringing it close to the end face of the light waveguide part, the optical element does not come in contact first with the end face of the lower clad layer. Therefore, it is possible to couple the optical element to the light waveguide part without having a gap, so that the optical coupling efficiency can be improved.

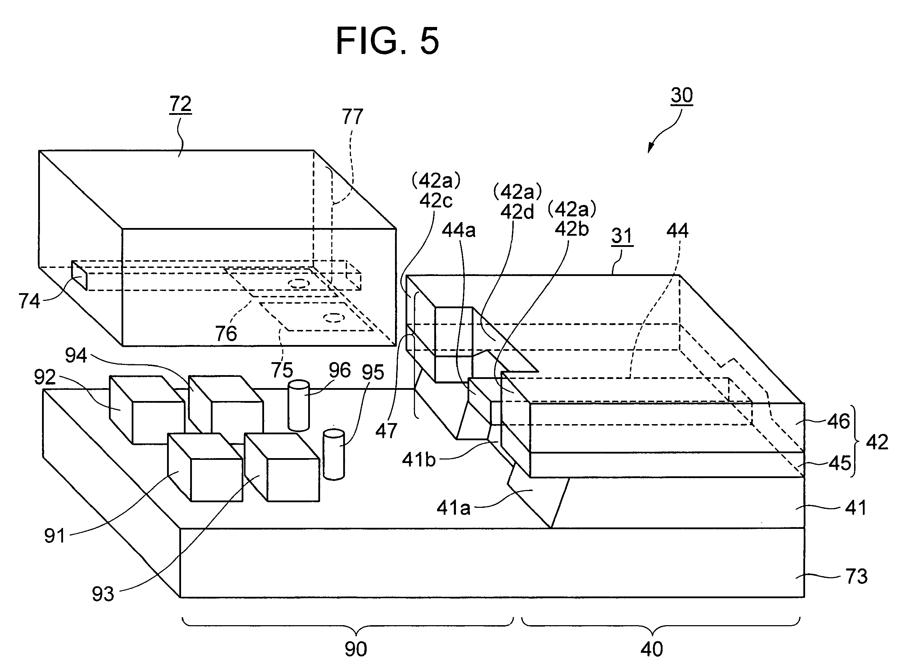

FIG. 5 is a detailed perspective view showing a second embodiment of the light waveguide device according to the present invention before packaging. Explanations will be provided hereinafter by referring to this drawing. Same reference numerals are applied to the same components as those of FIG. 1, and explanations thereof will be omitted.

A light waveguide device 30 according to this exemplary embodiment includes a PLC 31 of the exemplary embodiment and an LD 72 mounted to the PLC 31. The PLC 31 includes a light waveguide part 40 and an optical element mount part 90. The light waveguide part 40 has a lower clad layer 41, a core layer 44, and an upper clad layer 42 formed on a part of a silicon substrate 73. The optical element mount part 90 has the LD 72, which is to be optically coupled at a light waveguide end face 47, loaded on the silicon substrate 73.

At the light waveguide end face 47, an end face 42a of the upper clad layer 42 has first end faces 42b, 42c, and a second end face 42d. The end faces 42b and 42c are on a same plane or almost on a same plane with an end face 44a of the core layer 44. The end face 42d is in a periphery of the end face 44a of the core layer 44, and it is recessed with respect to the end face 44a of the core layer 44 in a direction away from the LD 72. That is, the end face 42a of the upper clad layer 42 is in a U-letter shape when viewed from the above. The upper clad layer 42 is configured with an embedding layer 45 for covering the core layer 44, and a clad layer 46 that is superimposed on the embedding layer 45.

In the wet etching step described in the step F of FIG. 4, there are cases where the difference between the etching rates of the core layer 44 and the upper clad layer 42 cannot be disregarded. That is, the etching rate of the upper clad layer 42 becomes so much greater than the etching rate of the core layer 44 that it cannot be disregarded, depending on combinations of the materials and manufacturing conditions of the light waveguide, the type of etchant, etching conditions (temperature, time, etc), and the like. In such cases, the core layer 44 becomes projected with respect to the upper clad layer 42 by the wet etching. Therefore, when mounting the LD 72, the LD 72 or the projected core layer 44 may be damaged because the active layer 74 of the LD 72 directly abuts against the end face 44a of the core layer 44.

Thus, the PLC 31 of this exemplary embodiment employs a following configuration. At the light waveguide end face 47, there are the end face 44a of the core layer 44 and the end faces 42b, 42c of the upper clad layer 42, the end face 42d of the upper clad layer 42, the end face 41a of the lower clad layer 41, and the end face 41b of the lower clad layer 41 located in this order from the one closer to the LD 72. Thus, when mounting the LD 72 by bringing it close to the light waveguide end face 47, the LD 72 does not come in contact first with the end face 41a of the lower clad layer 41. Therefore, the LD 72 can be coupled to the light waveguide part 40 without having a gap, so that the optical coupling efficiency can be improved. Here, the LD 72 comes in contact first not only with the end face 44a of the core layer 44 but also with the end faces 42b, 42c of the upper clad layer 42, so that the impact when the LD 72 comes in contact with the light waveguide end face 47 can be dispersed. Thereby, it is possible to prevent the optical coupling part of the LD 72 from being damaged by making contact with the end face 44a of the core layer 44. These structures can be designed broadly depending on the combinations of the materials and manufacturing conditions of the light waveguide, the type of etchant, etching conditions (temperature, time, etc), and the like.

Further, in this exemplary embodiment, there are two end faces 42b and 42c of the upper clad layer 42 formed by sandwiching the end face 44a of the core layer 44, when viewed from the light waveguide end face 47 side. Thus, even if the light emission end face 77 as the optical coupling part of the LD 72 has a flat face, and the LD 72 is brought close to the light waveguide end face 47 while the flat face is being nonparallel to the light waveguide end face 47, the LD 72 comes in contact first not with the end face 44a of the core layer 44 but with one of the two end faces 42b and 42c of the upper clad layer 42. Therefore, damaging of the optical coupling part of the LD 72 by making contact with the end face 44a of the core layer 44 can be avoided more securely. Needless to say, the end face 44a of the core layer 44 may be recessed with respect to the end faces 42b, 42c of the upper clad layer 42 in a direction away from the light emission end face 77 of the LD 72 for simply avoiding such damages.

The shape and the number of the end faces 42b, 42c of the upper clad layer 42 may be set arbitrarily, as long as their functions can be achieved. For example, there may be one end face, or three or more end faces provided by sandwiching the end face 44a of the core layer 44 when viewed from the light waveguide end face 47 side.

Next, the manufacturing method of the PLC 31 will be described by concentrating on the points that are different from the manufacturing method shown in FIG. 3 and FIG. 4. A second step and a third step in the followings correspond to the second step and the third step of the manufacturing method shown in FIG. 3 and FIG. 4.

First, in the second step, when eliminating a part of the lower clad layer 41, the core layer 44, and the upper clad layer 42 on the silicon substrate 73 by using RIE, the center part of the light waveguide end face 47 including the core layer 44 is recessed with respect to the peripheral part thereof towards a direction away from the LD 72. That is, the photoresist film used in RIE is formed into a U-letter shape when viewed from the above. The shape (dimension of the recessed part) of the photoresist film is closely related to the time for dipping into the etchant in the third step, so that it is designed properly in advance.

Further, in the third step, etchant exhibiting a greater etching rate for the upper clad layer 42 than for the core layer 44 is used so as to bring the end faces 42b, 42c of the upper clad layer 42 in the peripheral part closer to the end face 44a of the core layer 44, and recess the end face 42d of the upper clad layer 42 in the center part with respect to the end face 44a of the core layer 44 in the direction away from the LD 72.

The dipping time performed at this point is determined as follows. First, the etching rates of the etchant of the lower clad layer 41, the core layer 44, the embedding layer 45, and the clad layer 46 are obtained experimentally or logically. Then, based on those etching rates, the time required for the core layer 44 to be exposed on the surface of the light waveguide end face 47, for the lower clad layer 41 part in the light waveguide end face 47 to be recessed with respect to the upper clad layer 42 by a prescribed amount, and for the end faces 42b 42c of the upper clad layer 42 to be on the same plane or almost on the same plane with the end face 44a of the core layer 44 is calculated. This calculated time is the dipping time.

Thereby, at the light waveguide end face 47, there are the end face 44a of the core layer 44 and the end faces 42b, 42c of the upper clad layer 42, the end face 42d of the upper clad layer 42, the end face 41a of the lower clad layer 41, and the end face 41b of the lower clad layer 41 located in this order from the one closer to the LD 72.

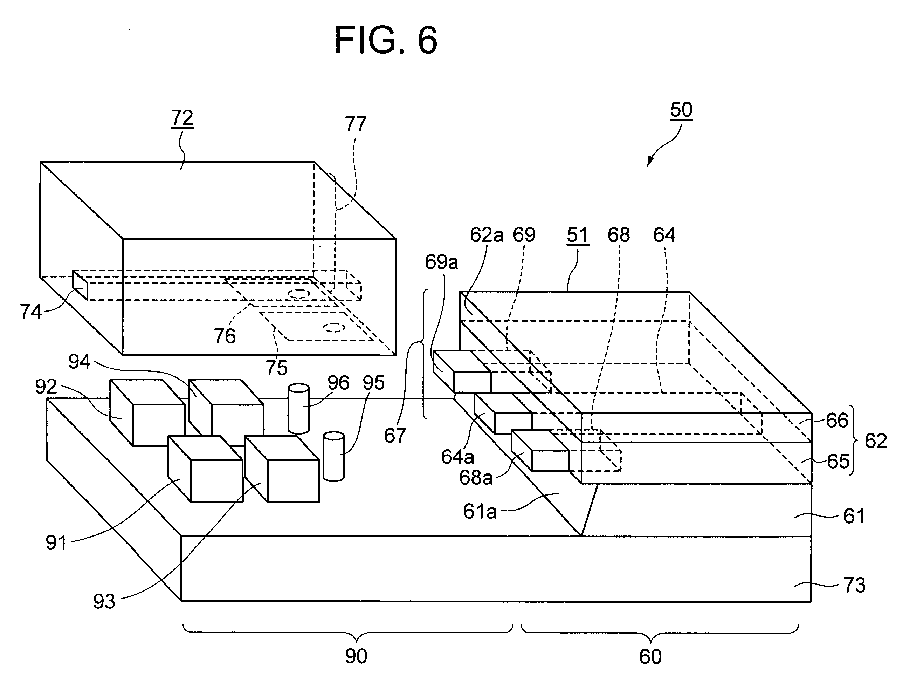

FIG. 6 is a detailed perspective view showing a third embodiment of the light waveguide device according to the present invention before packaging. Explanations will be provided hereinafter by referring to this drawing. Same reference numerals are applied to the same components as those of FIG. 1, and explanations thereof will be omitted.

A light waveguide device 50 according to this exemplary embodiment includes a PLC 51 of the exemplary embodiment and an LD 72 as an optical element mounted to the PLC 51. The PLC 51 includes a light waveguide part 60 and an optical element mount part 90. The light waveguide part 60 has a lower clad layer 61, core layer 64, 68, 69, and an upper clad layer 62 formed on a part of the silicon substrate 73. The optical element mount part 90 has the LD 72, which is to be optically coupled at a light waveguide end face 67, loaded on the silicon substrate 73.

The core layer 64 is a first core layer that is optically coupled to the LD 72. The core layers 68 and 69 are second core layers that are not optically coupled to the LD 72. At the light waveguide end face 67, the end faces 64a, 68a, and 69a of the core layers 64, 68, and 69 are on a same plane or almost on a same plane, and each of those end faces is projected towards a direction approaching to the LD 72 with respect to the end face 62a of the upper clad layer 62 in the periphery of each of the end faces 64a, 68a, and 69a. That is, each of the three end faces 64a, 68a, and 69a of the core layers 64, 68, and 69 is in a form that is projected towards the optical element mount part 90, when viewed from the above. The upper clad layer 62 is configured with an embedding layer 65 for covering the core layer 64, and a clad layer 66 superimposed on the embedding layer 65.

In the wet etching step described in the step F of FIG. 4, there are cases where the difference between the etching rates of the core layer 64 and the upper clad layer 62 cannot be disregarded. That is, the etching rate of the upper clad layer 62 becomes so much greater than the etching rate of the core layer 64 that it cannot be disregarded, depending on combinations of the materials and manufacturing conditions of the light waveguide, the type of etchant, etching conditions (temperature, time, etc), and the like. In such cases, the core layer 64 becomes projected with respect to the upper clad layer 62 by the wet etching. Therefore, when mounting the LD 72, the LD 72 or the projected core layer 64 may be damaged because the active layer 74 of the LD 72 directly abuts against the end face 64a of the core layer 64.

Thus, the PLC 51 of this exemplary embodiment employs a following configuration. At the light waveguide end face 67, there are the end faces 64a, 68a, 69a of the core layers 64, 68, 69, the end face 62a of the upper clad layer 62, and the end face 61a of the lower clad layer 61 in this order from the one closer to the LD 72. Thus, when mounting the LD 72 by bringing it close to the light waveguide end face 67, the LD 72 does not come in contact first with the end face 61a of the lower clad layer 61. Therefore, the LD 72 can be coupled to the light waveguide part 60 without having a gap, so that the optical coupling efficiency can be improved. Here, the LD 72 comes in contact first not only with the end face 64a of the core layer 64 as the first core layer but also with the end faces 68a, 69a of the core layers 68, 69 as the second core layers, so that the impact when the LD 72 comes in contact with the light waveguide end face 67 can be dispersed. Thereby, it is possible to prevent the optical coupling part of the LD 72 from being damaged by making contact with the end face 64a of the core layer 64. These structures can be designed broadly depending on the combinations of the materials and manufacturing conditions of the light waveguide, the type of etchant, etching conditions (temperature, time, etc), and the like.

Further, in this exemplary embodiment, there are two end faces 68a, 69a of the core layers 68, 69 as the second core layer formed by sandwiching the end face 64a of the core layer 64, when viewed from the light waveguide end face 67. Thus, even if the light emission end face 77 as the optical coupling part of the LD 72 has a flat face, and the LD 72 is brought close to the light waveguide end face 67 while the flat face is being nonparallel to the light waveguide end face 67, the LD 72 comes in contact first not with the end face 64a of .the core layer 64 but with one of the two end faces 68a and 69a of the core layers 68, 69. Therefore, damaging of the optical coupling part of the LD 72 by making contact with the end face 64a of the core layer 64 can be avoided more securely. Needless to say, the end face 64a of the core layer 64 may be recessed with respect to the two end faces 68a, 68a of the core layers 68, 69 in a direction away from the light emission end face 77 of the LD 72 for simply avoiding such damages.

The shape and the number of the end faces 68a, 69a of the upper clad layers 68, 69 may be set arbitrarily, as long as their functions can be achieved. For example, there may be one end face, or three or more end faces provided by sandwiching the end face 64a of the core layer 64 when viewed from the light waveguide end face 67 side.

Next, the manufacturing method of the PLC 51 will be described by concentrating on the points that are different from the manufacturing method shown in FIG. 3 and FIG. 4. A first step and a third step in the followings correspond to the first step and the third step of the manufacturing method shown in FIG. 3 and FIG. 4.

First, in the first step, the core layer 64 as the first core layer 64 and the core layers 68, 69 as the second core layers are formed simultaneously with a same material. For this, the mask for exposing the photoresist film in the first step may simply be changed. This photoresist film is used when etching the core layers.

Further, in the third step, etchant exhibiting a greater etching rate for the upper clad layer 62 than for the core layers 64, 68, 69 are used, so that the end faces 64a, 68a, 69a of the core layers 64, 68, 69 are on a same plane or almost on a same plane, and that the end faces 64a, 68a, 69a are projected with respect to the end face 62a of the upper clad layer 62 towards a direction approaching to the LD 72. The etching rates in the third step are in a relation of "core layers 64, 68, 69 < upper clad layer 62 < lower clad layer 61".

The time for dipping to the etchant is determined as follows. First, the etching rates of the etchant of the lower clad layer 61, the core layers 64, 68, 69, the embedding layer 65, and the clad layer 66 are obtained experimentally or logically. Then, based on those etching rates, the time required for the core layers 64, 68, 69 to be exposed on the surface of the light waveguide end face 67, and for the lower clad layer 61 part in the light waveguide end face 67 to be recessed with respect to the upper clad layer 62 by a prescribed amount is calculated. This calculated time is the dipping time.

Thereby, at the light waveguide end face 67 after the third step, there are the end face 64a, 68a, 69a of the core layer 64, 68, 69, the end face 62a of the upper clad layer 62, and the end face 61a of the lower clad layer 61 in this order from the one closer to the LD 72.

While the present invention has been described above by referring to each of the exemplary embodiments, the present invention is not limited to those exemplary embodiments. Various changes and modifications that occur to those skilled in the art may be applied to the structures and details of the present invention. Further, it is to be understood that the present invention includes combinations of a part of or the whole part of the structures described in each of the exemplary embodiments.

An example 1 describes a planar lightwave circuit, comprising: a light waveguide part having a lower clad layer, a core layer, and an upper clad layer formed on a part of a substrate; and an optical element mount part for loading, on the substrate, an optical element that is to be optically coupled to an end face of the light waveguide part, wherein
at the end face of the light waveguide part, an end face of the lower clad layer is recessed with respect to an end face of the core layer and an end face of the upper clad layer towards a direction away from the optical element.

An example 2 describes the planar lightwave circuit as described in the example 1, wherein:
the core layer includes a first core layer that is optically coupled to the optical element, and a second core layer that is not optically coupled to the optical element; and
at the end face of the light waveguide part, end faces of the first core layer and the second core layer are projected towards a direction approaching to the optical element, with respect to the end face of the clad layer in a periphery of the end faces of the first core layer and the second core layer.

An example 3 describes the planar lightwave circuit as described in the example 2, wherein the second core layer is formed on the lower clad layer along with the first core layer, and there are at least two second core layers formed by sandwiching the first core layer when viewed from the end face of the light waveguide part.

An example 4 describes the planar lightwave circuit as described in the example 1, wherein, at the end face of the light waveguide part, the end face of the upper clad layer has a first end face and a second end face that is in a periphery of the end face of the core layer and is recessed in a direction away from the optical element with respect to the end face of the core layer.

An example 5 describes a light waveguide device, comprising a planar lightwave circuit and an optical element mounted on the planar lightwave circuit, wherein:
the planar lightwave circuit comprises a light waveguide part having a lower clad layer, a core layer, and an upper clad layer formed on a part of a substrate, and an optical element mount part for loading, on the substrate, an optical element that is to be optically coupled to an end face of the light waveguide part; and
at the end face of the light waveguide part, an end face of the lower clad layer is recessed with respect to an end face of the core layer and an end face of the upper clad layer towards a direction away from the optical element.

An example 6 describes a manufacturing method of a planar lightwave circuit which comprises a light waveguide part having a lower clad layer, a core layer, and an upper clad layer formed on a part of a substrate, and an optical element mount part for loading, on the substrate, an optical element that is to be optically coupled to an end face of the light waveguide part, the method executing:
a first step of laminating the lower clad layer, the core layer, and the upper clad layer on the substrate;
a second step of forming the light waveguide part and the optical element mount part through eliminating the lower clad layer, the core layer, and the upper clad layer formed on the part of the substrate by using anisotropy etching; and
a third step of applying wet etching on the end face of the light waveguide part by using etchant that exhibits a greater etching rate for the lower clad layer than for the core layer and the upper clad layer to make an end face of the lower clad layer recessed with respect to an end face of the core layer and an end face of the upper clad layer towards a direction away from the optical element.

An example 7 describes the manufacturing method of the planar lightwave circuit as described in the example 6, wherein:
at laminating the lower clad layer, the core layer, and the upper clad layer on the substrate, as the core layer, a first core that is optically connected to the optical element and a second core layer that is not optically connected to the optical element are formed simultaneously with a same material; and
at making an end face of the lower clad layer recessed with respect to an end face of the core layer and an end face of the upper clad layer towards a direction away from the optical element, end faces of the first core layer and the second core layer are projected with respect to the end face of the upper clad layer towards a direction approaching to the optical element by using, as the etchant, etchant that exhibits a greater etching rate for the upper clad layer than for the core layer.

An example 8 describes the manufacturing method of the planar lightwave circuit as described in the example 7, wherein
at laminating the lower clad layer, the core layer, and the upper clad layer on the substrate, at least two second core layers are formed by sandwiching the first core layer when viewed from the end face of the light waveguide part.

An example 9 describes the manufacturing method of the planar lightwave circuit as described in the example 6, wherein:
at forming the light waveguide part and the optical element mount part, when eliminating the lower clad layer, the core layer, and the upper clad layer formed on the part of the substrate by using the anisotropic etching, a center part of the end face of the light waveguide part including the core layer is recessed with respect to a peripheral part thereof in a direction away from the optical element; and
at making an end face of the lower clad layer recessed with respect to an end face of the core layer and an end face of the upper clad layer towards a direction away from the optical element, the end face of the upper clad layer in the peripheral part is brought close to the end face of the core layer, and the end face of the upper clad layer in the center part is recessed with respect to the end face of the core layer in a direction away from the optical element by using, as the etchant, etchant that exhibits a greater etching rate for the upper clad layer than for the core layer.

## Claims

1. A planar lightwave circuit, comprising: a light waveguide part having a lower clad layer, a core layer, and an upper clad layer formed on a part of a substrate; and an optical element mount part for loading, on the substrate, an optical element that is to be optically coupled to an end face of the light waveguide part, wherein
at the end face of the light waveguide part, an end face of the lower clad layer is recessed with respect to an end face of the core layer and an end face of the upper clad layer towards a direction away from the optical element.

2. The planar lightwave circuit as claimed in claim 1, wherein:
the core layer includes a first core layer that is optically coupled to the optical element, and a second core layer that is not optically coupled to the optical element; and
at the end face of the light waveguide part, end faces of the first core layer and the second core layer are projected towards a direction approaching to the optical element, with respect to the end face of the clad layer in a periphery of the end faces of the first core layer and the second core layer.

3. The planar lightwave circuit as claimed in claim 2, wherein the second core layer is formed on the lower clad layer along with the first core layer, and there are at least two second core layers formed by sandwiching the first core layer when viewed from the end face of the light waveguide part.

4. The planar lightwave circuit as claimed in claim 1, wherein, at the end face of the light waveguide part, the end face of the upper clad layer has a first end face and a second end face that is in a periphery of the end face of the core layer and is recessed in a direction away from the optical element with respect to the end face of the core layer.

5. A light waveguide device, comprising a planar lightwave circuit and an optical element mounted on the planar lightwave circuit, wherein:
the planar lightwave circuit comprises a light waveguide part having a lower clad layer, a core layer, and an upper clad layer formed on a part of a substrate, and an optical element mount part for loading, on the substrate, an optical element that is to be optically coupled to an end face of the light waveguide part; and
at the end face of the light waveguide part, an end face of the lower clad layer is recessed with respect to an end face of the core layer and an end face of the upper clad layer towards a direction away from the optical element.

6. A manufacturing method of a planar lightwave circuit which comprises a light waveguide part having a lower clad layer, a core layer, and an upper clad layer formed on a part of a substrate, and an optical element mount part for loading, on the substrate, an optical element that is to be optically coupled to an end face of the light waveguide part, the method executing:
a first step of laminating the lower clad layer, the core layer, and the upper clad layer on the substrate;
a second step of forming the light waveguide part and the optical element mount part through eliminating the lower clad layer, the core layer, and the upper clad layer formed on the part of the substrate by using anisotropy etching; and
a third step of applying wet etching on the end face of the light waveguide part by using etchant that exhibits a greater etching rate for the lower clad layer than for the core layer and the upper clad layer to make an end face of the lower clad layer recessed with respect to an end face of the core layer and an end face of the upper clad layer towards a direction away from the optical element.

7. The manufacturing method of the planar lightwave circuit as claimed in claim 6, wherein:
at laminating the lower clad layer, the core layer, and the upper clad layer on the substrate, as the core layer, a first core that is optically connected to the optical element and a second core layer that is not optically connected to the optical element are formed simultaneously with a same material; and
at making an end face of the lower clad layer recessed with respect to an end face of the core layer and an end face of the upper clad layer towards a direction away from the optical element, end faces of the first core layer and the second core layer are projected with respect to the end face of the upper clad layer towards a direction approaching to the optical element by using, as the etchant, etchant that exhibits a greater etching rate for the upper clad layer than for the core layer.

8. The manufacturing method of the planar lightwave circuit as claimed in claim 7, wherein
at laminating the lower clad layer, the core layer, and the upper clad layer on the substrate, at least two second core layers are formed by sandwiching the first core layer when viewed from the end face of the light waveguide part.

9. The manufacturing method of the planar lightwave circuit as claimed in claim 6, wherein:
at forming the light waveguide part and the optical element mount part, when eliminating the lower clad layer, the core layer, and the upper clad layer formed on the part of the substrate by using the anisotropic etching, a center part of the end face of the light waveguide part including the core layer is recessed with respect to a peripheral part thereof in a direction away from the optical element; and
at making an end face of the lower clad layer recessed with respect to an end face of the core layer and an end face of the upper clad layer towards a direction away from the optical element, the end face of the upper clad layer in the peripheral part is brought close to the end face of the core layer, and the end face of the upper clad layer in the center part is recessed with respect to the end face of the core layer in a direction away from the optical element by using, as the etchant, etchant that exhibits a greater etching rate for the upper clad layer than for the core layer.
